# EUROPÄISCHE PATENTSCHRIFT

(11) **EP 3 293 124 B1**
(45) Veröffentlichungstag und Bekanntmachung des Hinweises auf die Patenterteilung: **04.12.2019**
(21) Anmeldenummer: 17196003.2
(22) Anmeldetag: 02.10.2013
(51) Int. Cl.: B65B 25/00, B65B 65/00, A23G 7/00, B65B 37/16, B65B 11/32

(54) **HOCHLEISTUNGS-VERPACKUNGSVERFAHREN ZUR VERPACKUNG VON, INSBESONDERE KLEINSTÜCKIGEN, PRODUKTEN UND HOCHLEISTUNGS-VERPACKUNGSEINRICHTUNG, INSBESONDERE ZUR DURCHFÜHRUNG DES VERFAHRENS**
HIGH POWER PACKAGING METHOD FOR PACKAGING OF, IN PARTICULAR SMALL PIECES, PRODUCTS AND HIGH POWER PACKAGING DEVICE, ESPECIALLY FOR CARRYING OUT THE METHOD
PROCÉDÉ D'EMBALLAGE À HAUTE PERFORMANCE PERMETTANT L'EMBALLAGE, EN PARTICULIER EN MORCEAUX, DE PRODUITS ET DISPOSITIF D'EMBALLAGE À HAUTE PERFORMANCE, EN PARTICULIER PERMETTANT LA MISE EN OEUVRE DU PROCÉDÉ

(30) Priorität: 11.10.2012 DE 102012019909
(43) Veröffentlichungstag der Anmeldung: 14.03.2018
(62) Teilanmeldung aus: 13776958.4
(73) Patentinhaber: THEEGARTEN-PACTEC GMBH & CO. KG, 01237 Dresden (DE)
(72) Erfinder: Förster, Bodo, 01768 Glashütte (DE); Wehner, Gert, 01328 Dresden (DE); Oehlert, Volker, 01809 Doha/Röhrsdorf (DE)
(74) Vertreter: Grünecker Patent- und Rechtsanwälte PartG mbB

(56) Entgegenhaltungen:
- EP-A1- 1 981 762
- DE-A1-102008 019 605
- US-B1- 6 233 903

## Beschreibung

Die Erfindung betrifft ein Hochleistungs-Verpackungsverfahren zur Verpackung von, insbesondere kleinstückigen, Produkten, vorzugsweise Süßwaren wie z.B. Hart- oder Weichkaramellen, Pralinen oder dergleichen und eine Hochleistungs-Verpackungseinrichtung, insbesondere zur Durchführung des Verfahrens sowie eine Hochleistungs-Verpackungsmaschine oder mit zumindest einer Verpackungsmaschinenanordnung aus mehreren Verpackungsmaschinen mit einer derartigen Verpackungseinrichtung.

Auf dem Gebiet der, insbesondere nach dem kontinuierlichen Prinzip arbeitenden Hochleistungs-Verpackungsmaschinen für kleinstückige Produkte wie Süßwaren die, je nach Produkt und gewünschtem Erscheinungsbild in einer Vielzahl unterschiedlicher Faltungen, wie z.B. Päckchen-, Brief- oder Säckchenfaltung oder z.B. Verpackungen mit einem Dreheinschlag oder einem Doppeldreheinschlag verpackt werden, geht das Bestreben einerseits nach raschem Formatwechsel bzw. einfache Umrüstbarkeit auf unterschiedliche Faltungsarten, andererseits auf höhere Leistungen. Diese liegen derzeit im Bereich von 1500 bis 2000 verpackten Artikeln pro Minute.

Derartige Lösungen sind z.B. mit unterschiedlichen Konfigurationen entsprechender Verpackungsmaschinen aus der DE 10 2008 019 605 A1 oder auch der DE 10 2005 017 329 A1 der Anmelderin bekannt.

Weiteren Leistungserhöhungen sind bei diesen schnell laufenden Maschinen Grenzen gesetzt, bedingt durch Massenkräfte rotierender Massen, eine präzise Synchronisation von Produktzuführung und -vereinzelung und Packmittelzufuhr, der Ableitung der Steuerungsbewegungen für die die Produkte klemmenden Haltebackenpaare, Haltemittel-Klemmeinrichtungen wie Packmittelzangen und der Steuerung der Verpackungsorgane selbst, in der Regel auf der Grundlage stehender Achsen und rotierender Nockenfolger.

Der Erfindung liegt daher die Aufgabe zugrunde, ein Hochleistungs-Verpackungsverfahren zur Verpackung von, insbesondere kleinstückigen, Produkten auszugeben, das eine wesentliche Steigerung der Verpackungsleistung, insbesondere auf dem Gebiet kontinuierlich arbeitender Verpackungsmaschinen, ermöglicht. Ferner soll eine Hochleistungs-Verpackungseinrichtung, insbesondere zur Durchführung des Verfahrens und eine Verpackungsmaschine sowie eine Verpackungsmaschinenanordnung mit zumindest einer derartigen Verpackungseinrichtung bereitgestellt werden.

Diese Aufgabe wird hinsichtlich des Hochleistungs-Verpackungsverfahrens erfindungsgemäß durch die Merkmale des Anspruches 1 und hinsichtlich der Hochleistungs-Verpackungseinrichtung erfindungsgemäß durch die Merkmale des Anspruches 9 gelöst. Bevorzugte Ausgestaltungen der Erfindung sind Gegenstand der Unteransprüche.

Das neue Hochleistungs-Verpackungsverfahren zeichnet sich erfindungsgemäß dadurch aus, dass eine Mehrzahl von Produktströmen durch die Verpackungseinrichtung geführt wird und zwar vorzugsweise parallel, vorzugsweise gleichzeitig und vorzugsweise in übereinstimmender Zuführungsrichtung.

Vorzugsweise wird nicht, wie bisher, ein Produktstrom durch eine Verpackungsmaschine bzw. Verpackungseinrichtung geführt, die insbesondere eine nach dem kontinuierlichen Prinzip ist, bei der die Produkte vermittels zumindest einem, üblicherweise vermittels einer Mehrzahl rotierender Köpfe verpackt werden, sondern nach der vorliegenden Erfindung zumindest ein Paar, vorzugsweise wenigstens teilweise paralleler Produktströme, so dass sich die Verpackungsleistung bisheriger Verpackungsmaschinen verdoppelt bzw. in Abhängigkeit von der Anzahl der Produktströme die vorzugsweise gleichzeitig und vorzugsweise im Wesentlichen parallel durch die Hochleistungs-Verpackungseinrichtung führbar sind, vervielfacht.

Es können also auch mehr als zwei Produktströme durch die Verpackungseinrichtung hindurchgeführt und verpackt werden. Insbesondere in Verbindung mit unterschiedlichen Zuführungsprinzipien, z.B. Entnahme aus Vereinzelungsteller oder lineare Zuführung aus Zuführungsband oder -kette, aber auch bei übereinstimmender Zuführung kann auch eine Zusammenführung von Produktströmen oder deren Auftrennung oder die Überführung einzelner Artikel eines Produktstroms in einen anderen Produktstrom vorgesehen sein, insbesondere bei Kombination einer getakteten, diskontinuierlichen Verfahrensführung mit einer kontinuierlichen Verfahrensführung und/oder der Zusammenordnung mehrerer Verpackungseinrichtungen in einer oder mehreren Verpackungsmaschinen oder Verpackungsmaschinenanordnungen.

Dabei ist dieses Hochleistungs-Verpackungsverfahren vollständig unabhängig von der gewählten Faltungsart für die Produktverpackung oder von der Anzahl der im Rahmen des bevorzugten, kontinuierlichen Prinzips verwendeten Köpfe oder Räder. D.h. erfindungsgemäß kann das Prinzip für eine Einkopf- oder Zweikopfmaschine ebenso wie für eine Drei- oder Mehrkopfmaschine verwendet werden (und zwar mit unterschiedlicher Zahl von Köpfen auch für jeden Produktstrom), wobei insbesondere ein rotierendes Entnahmerad mit einer Mehrzahl von Sätzen von Entnahmeeinheiten von denen jeder Satz einem Produktstrom zugeordnet ist oder eine Mehrzahl von Entnahmerädern mit jeweils einem Satz von Entnahmeeinheiten, zugeordnet einem Produktstrom, vorgesehen sind.

Entsprechend sind in den weiteren Prozessschritten für jeden Produktstrom die erforderlichen Produkt/Packstoff-Halteelemente vorgesehen, also bei Verwendung einer Übergabevorrichtung (Greiferrad) für jeden Produktstrom entsprechende Haltebackenpaare mit diesen zugeordneten Packstoff-Klemmeinrichtungen bzw. Sätze von Verpackungseinheiten in der nachgeordneten Packvorrichtung für jeden Produktstrom, so dass in jeder Verfahrensstufe eine Mehrzahl von Produkten parallel, vorzugsweise in gleicher Weise gefördert bzw. verpackt wird. Die Produktströme sind vorzugsweise gleichartig. Es können diese aber auch aus unterschiedlichen Produkten gebildet werden, die in verschiedenen Verpackungsverfahren, Falt- oder Einschlagarten verpackt werden.

Innerhalb einer Verpackungseinrichtung können die Produkte eines Produktstromes intermittierend und diejenigen eines anderen Produktstromes kontinuierlich, vorzugsweise gleichzeitig, verpackt werden. Vorzugsweise kann dabei auch eine nach dem kontinuierlichen Prinzip (kontinuierlicher Produktdurchlauf) arbeitende Verpackungseinrichtung mit einer diskontinuierlich arbeitenden Verpackungseinrichtung/Verpackungsmaschine in Linie verkettet sein.

Durch die Erfindung kann generell leistungssteigernd eine Kombination kontinuierlicher leitender Verpackungseinrichtungen mit diskontinuierlich leitenden Aggregaten sowohl für sämtliche mehrbahnigen Produktströme auch nur für einen Teil von ihnen vorgesehen werden. Die intermittierenden Aggregate können beispielsweise Umverpackungseinrichtungen, Stapelpacker mit Anstapelvorrichtungen, Verschlusseinrichtungen, wie Längs- oder Quersiegeleinrichtungen, insbesondere auf thermischer oder Ultraschallbasis, vorzugsweise für das Siegeln von Flossen von Schlauchbeutelverpackungen oder dergleichen, oder auch Endverschlusseinrichtungen (Kalt- oder Heißsiegeln) oder auch klebergestütztes Haftverbinden (Verschließen) von Packstoffen, ggf. auch mittels Ultraschall sein. Die mehrbahnige, vorzugsweise gleichzeitig-parallele Verarbeitung von zumindest zwei Produktströmen führt zur drastischen Leistungssteigerung hinsichtlich der Bereitstellung von endverpackten Produkten, seien es Einzelprodukte oder zu Sammelverpackungen vereinigte Produkte, wie z. B. verpackte Kaugummistreifen.

Vorzugsweise wird der Packstoff entweder in die Entnahmevorrichtung oder die Übergabevorrichtung im Wesentlichen radial eingeführt und zwar entweder unter Klemmen eines vorauslaufenden Endes des Packstoffbandes und Abtrennen eines Packstoffstückes oder unter vorheriger Abtrennung eines Packstoffstückes und Zuführung desselben in das betreffende Entnahmerad oder ein nachgeordnetes Greiferrad oder einem anderen Kopf einer Verpackungseinrichtung.

Als Produkt- und/oder Packstoffhaltemittel kommen neben mechanischen Packmittelzangen, insbesondere in Verbindung mit Produkt-Haltemitteln auch Vakuumdüsen oder dergleichen unterdruckgesteuerte Halteorgane, ggf. auch in Kombination miteinander in Betracht.

Vorzugsweise schließt sich an eine Packvorrichtung mit den jeweiligen Sätzen von Verpackungseinheiten pro Produktstrom ein Abgaberad an, mit dem die, vorzugsweise parallel geführten, Produkte zu einer Kühl- oder Temperierstrecke als Konditioniereinrichtung geführt werden, um z.B. die Stirnseiten der Verpackung heiß oder kalt anzusiegeln, um auf diese Weise eine hinreichend dichte, ggf. auch geruchs- oder aromadichte Verpackung auszubilden.

Auf diese Weise wird ein vorzugsweise zweibahniges aber gegebenenfalls auch mehrbahniges Verpackungssystem geschaffen, bei dem z.B. auch eine Zuführung der Produkte vom Strang (kontinuierlicher Massestrang) erfolgen kann, wobei die parallel in Richtung Entnahmerad/Entnahmeräder geführten Massestränge stromauf der Entnahmevorrichtung durch z.B. rechtwinklig zu den Massesträngen rotierende Messer getrennt und vereinzelte Produkte hergestellt werden, die anschließend von den entsprechenden Sätzen Entnahmeeinheiten, zugeordnet zu dem jeweiligen Produktstrom, entnommen bzw. aufgenommen werden.

Als Vereinzelungseinrichtung kann stromauf der Entnahmevorrichtung auch ein Vereinzelungsteller vorgesehen sein (oder eine Mehrzahl von Vereinzelungstellern) aus denen eine oder mehrere Längsfördereinrichtungen zur Ausbildung der Produktströme gespeist werden.

Durch die Erfindung ist eine Vervielfachung der Kapazität und des Leistungsvermögens derartiger, insbesondere auf der Basis des kontinuierlichen Prinzips arbeitender Verpackungsmaschinen, bei dem die Produkte kontinuierlich durch eine Verpackungseinrichtung hindurchgeführt werden, möglich. Das erfindungsgemäße Verpackungsverfahren kann aber auch auf intermittierend arbeitende Maschinen unter vorzugsweise Parallelführung mehrere Produktströme und Anordnung der entsprechenden Produkthalte- und Transportelemente sowie Packstoffhalteelemente pro Produktstrom oder in einer Kombination beider Verpackungsprinzipien (kontinuierlich/intermittierend) für die Mehrzahl der Produktströme angewandt werden.

Es ist also überdies auch möglich, die beiden Arbeitsprinzipien (kontinuierlich, intermittierend) für die Mehrzahl von Produktströmen miteinander zu kombinieren, d.h. die Produkte eines Produktstroms kontinuierlich und die Produkte eines anderen Produktstroms intermittierend zu verpacken. Dies kann auch mit unterschiedlichen Produkten und Faltungsarten für die Produktströme kombiniert werden.

Es kann auch die Verarbeitung der Produktströme und die Verpackungsstrategie innerhalb der Verpackungsmaschine für unterschiedliche Produktströme verschieden sein, d.h. ein Verpackungsstrom über z.B. nur zwei artikeltragende Köpfe (Entnahmevorrichtung, Packvorrichtung) verpackt werden, während die Produkte eines weiteren Produktstroms über drei oder mehr artikeltragende Köpfe verpackt werden.

Sowohl hinsichtlich der Kombination von - gleichzeitiger - intermittierender und kontinuierlicher Verpackung, als auch bei einer produktstromspezifischen Verpackungsstrategie (z.B. "2-Kopf-Prinzip"; "3-Kopf-Prinzip") sind die Produkt- und Packmittelhalteorgane wie auch gegebenenfalls die Packstoffzuführung für die einzelnen Produktströme im allgemeinen voneinander verschieden und an die jeweilige Verpackungsstrategie, Verarbeitung in einer produktstromspezifischen Anzahl von Köpfen oder unterschiedlichen Produkttypen, -geometrien und Faltarten oder Einschlagarten (unterschiedliche Bildung der Verpackung) angepasst. Es ist auch möglich Verpackungseinrichtungen/-maschinen mit nur einem Kopf mehrbahnig zu beschicken, d.h. dem Kopf oder einer Mehrzahl von vorzugsweise parallelen 1-Kopf-Verpackungseinrichtungen werden mehrere parallele Produktströme zugeführt, wobei die unverpackten Produkte wie auch der Packstoff benachbart zu dem Produkt dem Kopf zugeführt werden und die Artikel innerhalb einer Rotation des Kopfes mit einem Winkel α < 360° fertig verpackt und von dem Kopf abgegeben werden.

Die Erfindung betrifft also ein Hochleistungs-Verpackungsverfahren zur Verpackung von, insbesondere kleinstückigen, Produkten, vorzugsweise Süßwaren, wie Hart- oder Weichkaramellen, Pralinen oder dergleichen, wobei die Produkte in einer Mehrzahl von Produktströmen durch zumindest eine Verpackungseinrichtung hindurchgeführt werden, wobei die Produkte vorzugsweise gleichzeitig durch die zumindest eine Verpackungseinrichtung hindurchgeführt und/oder zu der Verpackungseinrichtung zugeführt werden.

Vorzugsweise werden die Produktströme der Verpackungseinrichtung parallel, vorzugsweise gleichzeitig, zugeführt, insbesondere ist eine Bewegungsgeschwindigkeit der Produkte durch die Verarbeitungseinrichtung im Wesentlichen gleich.

In einer vorteilhaften Ausführung ist eine einbahnige Zuführung eines Produktstromes und Aufteilung desselben zur Ausbildung einer Mehrzahl von die Verpackungseinrichtung durchsetzenden Produktströmen vorgesehen, wobei die Aufteilung vorzugsweise stromauf oder innerhalb der Verpackungseinrichtung erfolgt.

Bevorzugt werden die Produktströme der Verpackungseinrichtung aus einem gemeinsamen Produktvorrat, insbesondere eine Vereinzelungseinrichtung, oder aus getrennten Produktvorräten, insbesondere Vereinzelungseinrichtungen zugeführt. Vorzugsweise werden die Produktströme der Verpackungseinrichtung aus der gleichen oder aus unterschiedlichen Richtungen, vorzugsweise parallel, zugeführt.

Vorzugsweise werden in den Produktströmen gleiche oder verschiedene Artikel geführt und/oder diese in gleichen oder unterschiedlichen Verpackungsverfahren, Falt- oder Einschlagarten verpackt.

Es ist in vorteilhafter Weise vorgesehen, dass die Mehrzahl der Produktströme innerhalb der Verpackungseinrichtung jeweils aus vereinzelten Produkten besteht, die sich bevorzugt im Wesentlichen parallel zueinander, vorzugsweise in einer gleichen Verpackungsstufe des Verpackungsverfahrens befinden, wobei jedem Produkt innerhalb eines Produktstromes in der Verpackungseinrichtung ein Packstoffstück zugeordnet wird, insbesondere der Packstoff in die Verpackungseinrichtung mit hoher Geschwindigkeit im Wesentlichen radial als Packstoffband zugeführt, dieses in der Verpackungseinrichtung gehalten und ein Packstoffabschnitt abgetrennt wird oder Packstoffabschnitte von einer Packstoffbahn vor dem Einführen in die Verpackungseinrichtung abgetrennt und der Verpackungseinrichtung Packstoffabschnitte im Wesentlichen radial und vereinzelt zugeführt werden.

Vorzugsweise werden die Produkte mehrerer Produktströme in einem kontinuierlichen und/oder intermittierenden Prozess verpackt und/oder die Produktströme mit einer unterschiedlichen Anzahl von Vorrichtungen verarbeitet.

Insbesondere werden die Produkte zweibahnig parallel zu einer Entnahmevorrichtung der Verpackungseinrichtung mit Produktaufnahmemitteln für die Produkte jedes der Packstoffströme zugeführt. Nach Aufnahme der Produkte wird diesen sogleich ein Packstoffabschnitt zugeordnet und das Produkt wird mit dem Packstoffstück, vorzugsweise in Parallelführung der Produktströme, einer Packvorrichtung der Verpackungseinrichtung zugeführt, die Produkt/Packstoff-Haltemittel für die Produkte des Produktstromes aufweist, und das fertig verpackte Produkt (7) wird von der Verpackungseinrichtung (1) abgefördert.

Vorzugsweise wird im Anschluss an das Verpacken des Produktes die Verpackung, insbesondere thermisch, konditioniert, vorzugsweise über eine Kühlstrecke oder eine Wärmestrecke zur Unterstützung eines dichten Verschließens der Verpackung, insbesondere Ansiegelns von Packstoff, geführt.

Vorzugsweise nimmt die Entnahmevorrichtung die Produkte zumindest zweier Produktströme, die zumindest im Wesentlichen parallel und vorzugsweise aus der gleichen Richtung, insbesondere gleichzeitig, zugeführt werden, vorzugsweise aus einer im Wesentlichen horizontalen Bereitstellungsebene auf und/oder werden die Produkte der Produktströme aus der Entnahmevorrichtung im Wesentlichen gleichzeitig aufgenommen. Insbesondere wird eine Mehrzahl von, vorzugsweise paarweise, vorgesehenen Produktströmen einer Mehrzahl von Entnahmevorrichtungen zugeführt, insbesondere werden die Produkte der Mehrzahl von Produktströmen, aufgenommen durch die Mehrzahl von Entnahmevorrichtungen, einer gemeinsamen Packvorrichtung, vorgesehen zur Verarbeitung aller zugeführten Produktströme, oder einer der Anzahl der Entnahmevorrichtungen entsprechenden Anzahl von Packvorrichtungen zugeführt. Insbesondere werden die Produkte innerhalb der Produktströme stromauf der den Produktströmen zugeordneten Entnahmevorrichtung vereinzelt, vorzugsweise die Produktströme der Entnahmevorrichtung in Längsfördereinrichtungen oder nach Vereinzelung durch Abtrennung von einem kontinuierlichen Massestrang zugeführt und/oder die Produkte können innerhalb der Entnahmevorrichtung oder nach Übergabe an eine Greifervorrichtung um 90° gedreht werden.

In einer Ausführungsform der Erfindung wird der Packstoff mehrbahnig entsprechend der Anzahl der Produktströme, vorzugsweise im Wesentlichen radial, der Entnahmeeinrichtung zugeführt und benachbart zu den Produkten gehalten, vorzugsweise geklemmt. Insbesondere kann der Packstoff mehrbahnig entsprechend der Anzahl der Produktströme, vorzugsweise im Wesentlichen radial, zu einer stromab der Entnahmevorrichtung vorgesehenen Greifervorrichtung zugeführt werden, und es werden von dieser die Produkte mit zugeordnetem Packstoff mehrbahnig an die nachgeordnete Packvorrichtung übergeben.

In einer vorteilhaften Ausführung ist vorgesehen, dass eine Packstoffbahn eine Mehrzahl von Produktströmen, vorzugsweise im Wesentlichen quer zu diesen, lokal überdeckt und/oder ein Packstoffabschnitt vor seiner Abtrennung von der Packstoffbahn in eine Mehrzahl von Streifen getrennt und unterteilt wird, insbesondere pro Produktstrom zumindest eine, vorzugsweise zwei oder mehr Packstoffzuführungseinrichtungen, insbesondere Packstoffrollen, vorgesehen sind und vorzugsweise Packstoff an in Bewegungsrichtung des Packstoffstromes unterschiedliche Position zu Produkten diesen zugeführt wird.

Vorzugsweise werden die Produkte aus einer Produktzuführung entnommen oder zugeführt und zumindest teilweise in einem einzigen Kopf oder einer einzigen, vorzugsweise um eine stationäre Rotationsachse rotierenden Vorrichtung verpackt, insbesondere werden Produkt und Packstoff gemeinsam oder zeitlich versetzt dem Kopf zugeführt.

Es ist bevorzugt, dass die Produkte jedes Produktstromes in einer funktionsgleichen oder funktionsähnlichen Vorrichtung zunächst im Wesentlichen gleichbehandelt werden, vorzugsweise diese Vorrichtungen produktstromspezifisch zum einen diskontinuierlich (intermittierend) und zum anderen kontinuierlich angetrieben werden, oder eine Mehrzahl zum kontinuierlichen Betrieb ausgelegter Vorrichtungen/Köpfe, zugeordnet zu einer Mehrzahl von Produktströmen, intermittierend angetrieben werden.

Es kann vorgesehen sein, dass die Produkte eines Produktstromes, insbesondere mit produktstromspezifisch intermittierend oder kontinuierlich angetriebenen Köpfen oder Rädern, vorzugsweise derselben Verfahrensstufe, in einen anderen Produktstrom, z.B. von kontinuierlicher zu diskontinuierlicher Produktverarbeitung, oder umgekehrt, transferiert werden.

Die Erfindung umfasst auch eine Hochleistungs-Verpackungseinrichtung zur Verpackung von, insbesondere kleinstückigen, Produkten, vorzugsweise Süßwaren, wie Hart- oder Weichkaramellen, Pralinen oder dergleichen, insbesondere zur Durchführung eines der vorbezeichneten Hochleistungs-Verpackungsverfahren mit Verarbeitung einer Mehrzahl von Produktströmen aus vereinzelten Produkten, mit zumindest einer Packvorrichtung, die eine Mehrzahl von aus Produkt/Packstoff-Haltemitteln bestehenden Verpackungseinheiten aufweist und jede Verpackungseinheit einem Produktstrom aus vereinzelten Produkten zugeordnet ist.

Vorzugsweise ist eine gleichzeitige Verarbeitung der Produktströme, die im Wesentlichen parallel und/oder in gleicher Richtung geführt sind, insbesondere nach dem Prinzip aneinander abrollender Kreise zusammenarbeitender Köpfe oder Räder vorgesehen.

Gemäß einem Ausführungsbeispiel weist eine Entnahmevorrichtung zumindest ein Entnahmerad mit mehreren Sätzen von, vorzugsweise schwenkbar zur, insbesondere horizontalen, Rotationsachse des Entnahmerades parallele Schwenkachsen schwenkbare Entnahmeeinheiten auf, wobei jeweils ein Satz dieser Entnahmeeinheiten einem Produktstrom zugeordnet ist, und die Entnahmeeinheiten vorzugsweise aus paarweise angeordneten Haltebackenpaaren oder Vakuumsaugern bestehen.

Es ist auch vorteilhaft, wenn die eine Entnahmevorrichtung eine Mehrzahl von Entnahmerädern mit jeweils an diesen vorzugsweise schwenkbar gelagerten Entnahmeeinheiten aufweist, wobei die Anzahl der Entnahmeräder der Anzahl der Produktströme entspricht.

Vorzugsweise ist einer Entnahmevorrichtung eine Mehrzahl von Längsfördereinrichtungen, wie Transportbändern, Ketten oder dergleichen vorgeschaltet und jeder Längsfördereinrichtung vorzugsweise ein Produktstrom zugeordnet oder eine Mehrzahl von Produktströmen sind durch zumindest eine gemeinsame Längsfördereinrichtung der Entnahmevorrichtung zugeführt.

Es kann auch eine einbahnige Zuführung eines Packmittelstromes aus einzelnen Produkten und eine Produktweiche stromauf der Entnahmevorrichtung zur Erzeugung einer Mehrzahl von Produktströmen aus vereinzelten Produkten durch die Hochleistungs-Verpackungseinrichtung vorgesehen sein und/oder eine Zuförderung von Massesträngen als Produktströme erfolgen, von denen stromauf der Entnahmevorrichtung durch, vorzugsweise rotierende Messer und Trennbearbeitung in einer Ebene senkrecht zur Zuführungsrichtung, einzelne Produkte gebildet sind, die vereinzelt von je einem Satz Entnahmeeinheiten eines oder mehrerer Entnahmeräder entnommen sind.

Nach einer bevorzugten Ausführung ist zumindest eine Packmittelzuführungsvorrichtung zur Zuführung von Packstoff zu den vereinzelten Produkten entweder, insbesondere im Wesentlichen radial, zu der Entnahmevorrichtung oder einer stromab derselben als Greiferrad ausgebildeten Übergabevorrichtung vorgesehen und/oder Packstoffabschnitte in der Entnahmevorrichtung, insbesondere dem jeweiligen Entnahmerad, entweder vor oder nach dem Abtrennen von einer Packstoffbahn benachbart zu einem Produkt gehalten oder einer für jeden Packmittelstrom vorgesehenen Übergabevorrichtung, insbesondere Greiferrädern, stromab der Entnahmevorrichtung in entsprechender Weise zugeführt.

Die Hochleistungs-Verpackungseinrichtung beinhaltet vorzugsweise eine um eine parallele Rotationsachse zu einer Rotationsachse der Entnahmevorrichtung und/oder der Rotationsachse einer Greifervorrichtung drehbare Packvorrichtung mit je einem, jedem Packmittelstrom zugeordnetem Satz von Verpackungseinheiten,

Insbesondere ist der Packvorrichtung eine vorzugsweise als Abgaberad ausgebildete, mehrbahnige Abfördereinrichtung und/oder eine dieser nachgeordnete Konditionierstrecke, insbesondere Kühl- oder Wärmestrecke zum Dichtverschließen der Verpackungen, insbesondere stirnseitigen Ansiegeln, zugeordnet.

Vorzugsweise enthält die Verpackungseinrichtung eine Mehrzahl von Entnahmevorrichtungen, denen jeweils eine Mehrzahl von Produktströmen, insbesondere parallele, paarweise vorgesehene Produktströme, zugeordnet sind und die Entnahmevorrichtungen einer Packvorrichtung zugeordnet sind, die mit einer Anzahl von Sätzen von Verpackungseinheiten bestückt ist, wobei die Anzahl der Sätze von Verpackungseinheiten der Anzahl der Packmittelströme der Entnahmevorrichtungen entspricht.

Insbesondere enthält die Hochleistungs-Verpackungseinrichtung intermittierend und kontinuierlich arbeitende Vorrichtungen für gleiche oder verschiedene Produktströme und/oder eine gleiche oder unterschiedliche Anzahl verpackungswirksamer Vorrichtungen für gleiche oder verschiedene Produktströme und/oder gleiche oder unterschiedliche Produkt- und/oder Packstoff-Haltelemente und/oder Vorrichtungsmittel, insbesondere der Packvorrichtung, für gleiche oder unterschiedliche Produktströme. Produktabhängig ist die Verpackungseinrichtung vorgesehen mit einem einzigen Kopf oder einer um eine stationäre Rotationsachse umlaufenden Vorrichtung zum teilweisen oder vollständigen Verpacken der Produkte mehrerer Produktströme.

Vorzugsweise sind Transfereinrichtungen zwischen unterschiedlichen Produktströmen zugeordneten Köpfen oder Rädern, insbesondere zwischen produktstromspezifischen Produkt-/ Packstoff-Haltemitteln vorgesehen, und/oder eine Kombination funktionsgleicher oder funktionsähnlicher aber unterschiedlich intermittierend und kontinuierlich für verschiedene Produktströme angetriebener Vorrichtungen, wie Entnahme-, Greifer- oder Packvorrichtungen.

Insbesondere weist die Hochleistungs-Verpackungseinrichtung einer Mehrzahl von Produktströmen zugeordneter Produkt-/Packstoff-Halteeinheiten auf, vorzugsweise miteinander durch Transfereinrichtungen verbindbar, insbesondere vorgesehen an einer einzigen rotierenden Vorrichtung, insbesondere Kopf oder Rad.

Erfahrungsgemäß ist ferner eine Hochleistungs-Verpackungsmaschine mit zunächst einer Hochleistungs-Verpackungseinrichtung der vorbeschriebenen Art oder eine Verpackungsmaschinenanordnung bestehend aus einer Mehrzahl von derartigen Verpackungsmaschinen vorgesehen.

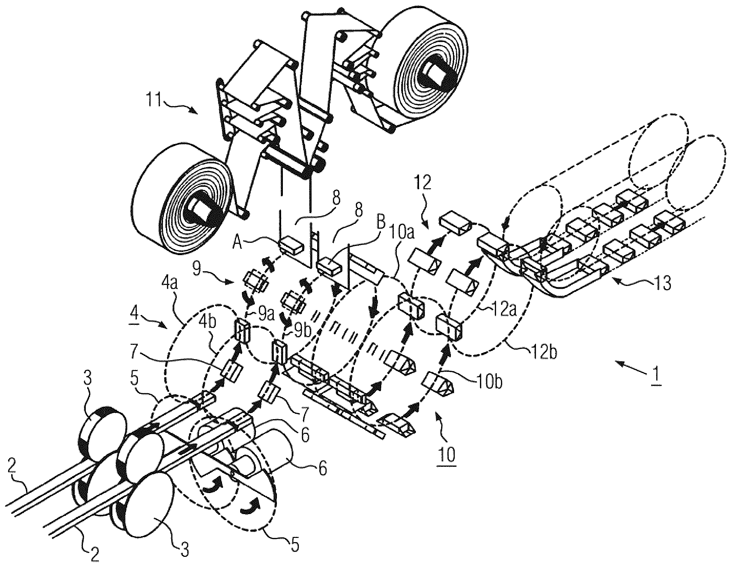

Die Erfindung wird nachstehend anhand eines Ausführungsbeispiels und einer zugehörigen Zeichnung näher erläutert. In dieser zeigt die Figur in schematischer Darstellung eine Hochleistungs-Verpackungseinrichtung für hohe Leistungen, bei der die zu verpackenden Produkte von je einem Massestrang abgetrennt werden. Die in der Figur gezeigte Vorrichtung ist nicht Teil der Erfindung.

Der Hochleistungs-Verpackungseinrichtung 1 werden im Wesentlichen parallel zwei Massestränge 2 durch Zuführungswalzen 3 zugeführt und stromauf einer Entnahmevorrichtung 4 durch rechtwinklig zur Transportrichtung der Massestränge 2 vorgesehene, rotierende Schneidmesser 5, die von Servomotoren 6 angetrieben sind, einzelne Produkte 7 vereinzelt und paarweise und vorzugsweise gleichzeitig und aus der gleichen Richtung der Entnahmevorrichtung 4 zugeführt. Auf diese Weise bilden die Produkte 7 zwei parallele Produktströme A, B, die parallel und vorzugsweise unabhängig voneinander durch die Verpackungseinrichtung 1 geführt werden.

Die vereinzelten Produkte 7 werden hier in Päckchenfaltung verpackt, es kann jedoch auch jede andere Faltungsart oder Verpackungsart in gleicher Weise eingesetzt werden, insbesondere in Abhängigkeit von der Art der Produkte.

Anstelle der Abtrennung der Produkte vom Massestrang können diese selbstverständlich über korrespondierend zur Darstellung der Massestränge 2 anzuordnende Längsführungseinrichtungen der Entnahmevorrichtung 4 zugeführt werden. Auch eine vereinzelte Zuführung unter Verwendung eines oder mehrerer Produktvorratsspeicher aus denen die Produkte in Längsführungseinrichtungen vereinzelt werden, ist möglich, wie auch die Führung der Produkte in zunächst nur einem einzigen Produktstrom, der über eine Produktweiche dann stromauf der Entnahmevorrichtung 4 auf zwei oder mehr Produktströme aufgeteilt wird. In diesem Fall wäre die Zuführungsgeschwindigkeit doppelt so hoch wie die Durchlaufgeschwindigkeit der Produkte durch die Verpackungseinrichtung 1 zu wählen.

Die Figur zeigt die Verarbeitungseinrichtung hier in schematischer Darstellung und ohne die entsprechenden Produkthalteorgane (üblicherweise Haltebackenpaare) bzw. ohne die Einrichtungen zum Klemmen von Packstoffabschnitten 8 innerhalb der Verarbeitungseinrichtung. Diese ist hier auch ohne Details zu den Produkthaltemitteln und Einschlagvorrichtungen an einer nachgeordneten Packvorrichtung 10, da hierfür sämtliche Faltungsarten und technischen Ausführungsmittel gewählt werden können, wie sie z.B. Gegenstand der eingangs erwähnten DE 10 2008 019 605 A1 und DE 10 2005 017 329 A1 sind, deren Inhalt hiermit durch ausdrückliche Inbezugnahme mit zum Gegenstand und Inhalt der vorliegenden Anmeldung gemacht wird und auf die insoweit hinsichtlich der technischen Ausführung dieser Mittel als eine Ausführungsweg Bezug genommen wird.

Die Entnahmevorrichtung 4 ist vorzugsweise als aus zwei koaxialen Entnahmerädern 4a, 4b bestehend ausgebildet, an denen hier nicht dargestellte Produkthaltemittel, die schwenkbar um eigene Parallelachsen zur Rotationsachse der Entnahmeräder 4a, 4b schwenkbare Entnahmeeinheiten, jeweils bestehend aus einem Haltebackenpaar zur Produktentnahme, vorgesehen sind.

Es ist aber auch möglich, die beiden Sätze von Entnahmeeinheiten (jeder Satz von Entnahmeeinheiten ist einem Produktstrom A, B zugeordnet) beiderseits eines einzigen Entnahmerades anzuordnen und z.B. die Antriebe der schwenkbaren Entnahmeeinheiten über koaxiale Steckachsen zu realisieren. Kann ein hohes Maß an Synchronisation der Zuführgeschwindigkeit und Vereinzelung der Produkte 7 sichergestellt werden, können die Sätze Entnahmeeinheiten der Entnahmeräder 4a, 4b bzw. als Alternative eines einzigen Entnahmerades auch über jeweils einen gemeinsamen Antrieb angesteuert werden. Größere Flexibilität und Toleranzfelder hinsichtlich der Steuerung sind aber durch separate Antriebe zu erreichen.

In dem vorliegendem Fall ist die Verpackungseinrichtung 1 als Dreikopfmaschine ausgebildet (maßgebend ist jeweils die Anzahl verpackungswirksamer artikeltragender Köpfe), wobei sich als Greifervorrichtung oder Übergabevorrichtung an die Entnahmevorrichtung 4 eine aus zwei Greiferrädern 9a, 9b bestehende Übergabevorrichtung 9 anschließt, wobei auch hier die entsprechenden Haltemittel für Produkte und in die Übergabevorrichtung zugeführte Packstoffabschnitte 8 nicht gezeigt sind. Diese Produkthaltemittel sind vorzugsweise Haltebackenpaare mit diesen zugeordneten PackstoffHalteeinrichtungen (Packmittelzangen), die um eigene oder koaxiale Achsen zu den Entnahmeeinheiten oder von Haltebacken oder Haltebackenpaaren der Entnahmeräder 9a, 9b schwenkbar sind.

Die ersten und zweiten Sätze von Produktaufnahmemitteln der Entnahmeräder 4a, 4b und der Greiferräder 9a, 9b kämmen miteinander im Sinne aneinander abrollender Räder, wie dies bei Verpackungsmaschinen nach dem kontinuierlichen Prinzip üblich ist. Die Drehrichtungen der Entnahmeräder 4a, 4b bzw. der Greiferräder 9a, 9b sind durch Pfeile in der Figur angegeben. In diesem Falle werden die Produkte 7 auf ihrem Transportweg durch die Greiferräder 9a, 9b zwischen Aufnahme von den Entnahmerädern 4a, 4b und dem Einschießen, d.h. der radialen Zufuhr von Packstoffabschnitten 8 um 90° gedreht, wie dies ebenfalls durch Pfeile in der Zeichnung angegeben ist.

Die Packstoffzufuhr in die Greiferräder 9a, 9b erfolgt von entsprechenden Packmittelzuführungsvorrichtungen 11 (von diesen ist hier nur eine gezeigt), wobei der Packstoff entweder als Packstoffband radial benachbart zu entsprechenden Packstoffhaltemitteln und den Produkthaltemitteln eingeführt, festgehalten (geklemmt) und anschließend die Packstoffabschnitte 8 vom Packstoffband abgetrennt werden oder aber die Packstoffabschnitte 8 werden bereits vom Packstoffband abgetrennt in die Greiferräder 9a, 9b eingeführt.

Für den Fall, dass die Sätze Entnahmeeinheiten in der Entnahmevorrichtung 4 an einem gemeinsamen Entnahmekopf oder Entnahmerad angeordnet sind, ist natürlich auch in der Abfolge der weiteren verpackungswirksamen Köpfe bzw. Räder jeweils nur eines, wie z.B. ein Greiferrad als Greifervorrichtung 9 mit dupliziert angeordneten Produkt-/Packstoff-Haltemitteln vorgesehen.

Aus den Greiferrädern 9a, 9b werden die Produkte, teilweise bereits umhüllt (U-förmiger Umschlag von Packstoff, um die Produkte 7) an nachgeordnete Packräder 10a, 10b einer Packvorrichtung 10 übergeben, in denen der Einschlagprozess vervollständigt und die Produkte, hier in Päckchenfaltung, vollständig verpackt werden.

In dem vorliegenden Ausführungsbeispiel schließt sich an die Packvorrichtung 10 noch eine Abgabevorrichtung 12 mit Abgaberädern 12a, 12b an, zur Überführung der Produkte in eine Kühl- oder Wärmestrecke 13, in der stirnseitig die Verpackungen dichtversiegelt werden je nach entsprechender Auslegung und Konditionierung der Packstofffolie, so dass dann die Produkte zweibahnig und hier in Päckchenfaltung verschlossen, wie dargestellt aus der Hochleistungs-Verpackungseinrichtung 1 abgeführt werden können.

Die Anzahl der verpackungswirksamen Köpfe ist beliebig und für die Produktströme auch jeweils unterschiedlich wählbar, ebenso die Art der Faltungen und der Produktverpackungen, d.h. die Ausbildung der jeweiligen Produkthalte und Steuermittel bzw. der Packstoffhalteeinrichtungen, die den Produkthaltemitteln (üblicherweise schwenkbare Haltebackenpaare), zugeordnet sind. Es könnte z.B. auch der Packstoff direkt in die Entnahmevorrichtung 4 in entsprechender Weise radial zugeführt werden, wobei dann in diesem Entnahmerad oder Entnahmekopf bzw. den Entnahmerädern 4a, 4b die entsprechende Packstoffhaltemittel (schwenkbare Packstoffzangen) vorgesehen sind, wie dies z.B. Gegenstand der DE 10 2005 017 329 ist, so dass die Greifervorrichtung 9 entfallen könnte, d.h. die Entnahmevorrichtung 4 direkt in Kombination mit der Packvorrichtung 9 arbeitet. Gegebenenfalls ist für jeden Produktstrom eine eigene Abgabe- und/oder Konditionsvorrichtung für ein Ansiegeln von Packstoffabschnitten vorgesehen.

Es ist also auch in Abhängigkeit von der Komplexität der Faltung oder anderen Erfordernissen möglich, entsprechend eine kleinere oder größere Anzahl von verpackungswirksamen Köpfen und Zusatz oder Hilfseinrichtungen (wie Siegelstrecken, Abführvorrichtungen oder dergleichen) vorzusehen (z. B. 1-Kopf-Maschine oder 2- bis 5-Kopf-Maschine).

Auch ist die Führung mehrerer Produktströme durch die Verpackungseinrichtung 1 nicht auf zwei Produktströme A, B beschränkt, sondern es können auch mehr als zwei Produktströme parallel durch die Verpackungseinrichtung 1 geführt werden, unter entsprechender Mehrfachanordnung der verpackungswirksamen Köpfe und Produktzuführ- und Vereinzelungseinrichtungen.

Es ist überdies auch möglich, eine Mehrzahl von Entnahmevorrichtungen 4 entweder in direkter Prozessabfolge auf nur einer Packvorrichtung arbeiten zu lassen, wenn diese mit einer entsprechenden Vervielfachung von Sätzen von Packstationen entsprechend der Summe der Packstoffströme ausgerüstet ist, gegebenenfalls auch unter Verwendung entsprechender Greifervorrichtungen zwischen den Entnahmevorrichtungen und der Packvorrichtung.

Durch die erfindungsgemäße Einrichtung der Führung einer Mehrzahl von Produktströmen A, B, vorzugsweise gleichzeitig und unabhängig voneinander, in Parallelführung und Anordnung der entsprechenden verpackungswirksamen Vorrichtungen, kann die Verpackungsleistung einer solchen, zu einer Verpackungsmaschine zur vervollständigenden Verpackungseinrichtung gegenüber herkömmlichen Verpackungsmaschinen vervielfacht werden, bei gleichzeitig hohem Integrationsgrad und Kompaktheit einer solchen Verpackungsmaschine.

Die entsprechenden, verpackungswirksamen Köpfe oder Räder der gleichen Prozessstufe, die vorzugsweise koaxial angeordnet sind und um Starrachsen rotieren und jedem Produktstrom zugeordnet sind, sind vorzugsweise mit einem eigenen Antriebsregime und Steuerorganen ausgerüstet (z.B. durch Verwendung von Hohlachsen und Steckachsen, auf denen die jeweiligen Steuerkurven für die Produkt- und Packstoff-Haltemittel angeordnet sind), um Toleranzen in der Produktzuführung und -verarbeitung zwischen den jeweiligen Produktströmen (hier A, B) Rechnung zu tragen. Die Produktströme A, B können mit unterschiedlichen Geschwindigkeiten durch die Verpackungseinrichtung geführt werden, bei entsprechender räumlicher Auftrennung der einzelnen Stationen in unabhängige Räder wie in der schematischen Darstellung angedeutet. D.h. die Drehzahlen der entsprechenden, den Produktströmen zugeordneten Köpfe oder Räder wie Entnahmeräder 4a, 4b, Greiferräder 9a, 9b oder Packräder 10a, 10b sind vorzugsweise unabhängig steuerbar.

Die Produktströme können aber nicht nur aus gleichen, sondern auch aus voneinander verschiedenen Produkten bestehen, so dass in der Entnahmevorrichtung und/oder der Greifervorrichtung und/oder der Packvorrichtung (die auch aus mehreren abfolgenden Köpfen bestehen kann, wie auch die Greifervorrichtung in mehrere abfolgend angeordnete Köpfe aufgeteilt werden kann) für die einzelnen Produktströme unterschiedliche Produkt- und/oder Packstoffhaltemittel vorgesehen sind und innerhalb der Verpackungseinrichtung unterschiedliche Produkte in unterschiedlicher Faltart oder Produktverpackung parallel verpackt und gleichzeitig durch die Verpackungseinrichtung hindurchgeführt werden können.

Die Erfindung schafft so ein sehr variables Konzept für eine wesentliche Leistungssteigerung von Verpackungsmaschinen, wie sie insbesondere für kleinstückige Süßwaren eingesetzt werden, so dass Verpackungsleistungen erreichbar sind, die um ein Mehrfaches über denjenigen herkömmlicher Verpackungsmaschinen liegen und bei einer zweibahnigen oder dreibahnigen Auslegung einer solchen Verpackungseinrichtung Verpackungsleistungen von 2500 bis 6000 Produkten pro Minute möglich sind. Die Produktströme A, B mit den zugehörigen Einrichtungen können in einer einzigen Verpackungsmaschine integriert, so dass alle zugehörigen Hilfseinrichtungen jeweils nur einmal vorgesehen werden müssen, so dass eine Verpackungsmaschine mit einer mehrbahnigen Verpackungseinrichtung innerhalb derselben zu einer hohen Kompaktheit bei gleichzeitiger Leistungsvervielfachung führt. Es können aber in Verbindung mit mehreren im Wesentlichen parallelen und/oder gleichzeitig geführten Produktströmen auch mehrere Verpackungsmaschinen, insbesondere in kontinuierlich intermittierender (diskontinuierlicher) Längsverkettung vorgesehen sein.

Es können auch mehrere Produktströme auf einer gemeinsamen Längsfördereinrichtung, z.B. einem Zuförderband an einer Entnahmevorrichtung mit einer Mehrzahl von Entnahmerädern entsprechend der Anzahl von Produktströmen oder einer Mehrzahl von Entnahmeeinheiten entsprechend der Anzahl von Produktströmen vorgesehen sein.

Es ist auch möglich, das Prinzip der mehrbahnigen Führung von vorzugsweise unabhängigen Produktströmen durch eine Verpackungseinrichtung mit dem Konzept eines modularen Aufbaus einer solchen Verpackungseinrichtung zu verbinden, wie dies z.B. in der DE 10 2008 019 605 A1 dargelegt ist, so dass z.B. durch Austausch der Zuführungseinrichtungen oder der Packvorrichtung rasche Anpassungen an Format-, Produkt- und Wechsel der Faltungsarten vorgenommen werden können.

Eine Verpackungsmaschine kann einen oder mehrere Verpackungseinrichtungen aufweisen. Es kann auch eine Anordnung einer Mehrzahl von Verpackungsmaschinen zu einer Verpackungsmaschinenanordnung zusammengeordnet werden.

Es kann auch in Verbindung mit einer Führung mehrerer Produktströme durch eine oder eine Mehrzahl von Verpackungseinrichtungen um eine verfahrens- und/oder vorrichtungstechnische Kombination von einem/einer kontinuierlichen Verpackungsprozess/Verpackungseinrichtung mit einem/einer diskontinuierlichen, intermittierenden Verpackungsverfahren/Verpackungseinrichtung in abfolgender Anordnung vorgesehen sein. Die Produktionsströme können im Wesentlichen in gleicher Richtung oder auch in unterschiedlichen Richtungen vorzugsweise auch in 180° entgegengesetzter Richtung durch eine Mehrzahl von vorzugsweise im Wesentlichen parallel arbeitenden Packvorrichtungen geführt sein.

Schließlich ist es auch, insbesondere bei weniger komplizierten Produkten oder Faltungs- oder Einschlagarten möglich, eine Einkopf-Maschine zu realisieren.

Diesem Kopf kann z.B. auch Produkt und Packstoff quasi gleichzeitig, z.B. durch eine Einstößervorrichtung oder durch gemeinsame Bereitstellung im Bewegungsweg eines umlaufenden Greifers des Kopfes zugeführt werden, gefolgt von einem Teil der Faltoperationen zur Verpackung des Produktes und z.B. einer Fertigverpackung desselben im sich an den Kopf anschließenden Auslauf.

Natürlich können dem Kopf Produkt- und Packstoff auch separat zugeführt oder der Kopf als eine Kombination von Entnahme- und/oder Greifer und/oder Packkopf zur zumindest Teilverpackung des Produktes sein.

Es ist auch möglich, alle Verfahrensschritte von der Entnahme des Produktes aus einer Zuführungs- und Vereinzelungseinrichtung bis zur Abgabe des fertig verpackten Produktes, d.h. insbesondere die vollständige Verpackung des Produktes, mit einem einzigen Kopf oder Rad zu bewerkstelligen, der die entsprechenden Produkt- und Packstoffhaltemittel aufweist und dem vorzugsweise im Wesentlichen radial nicht nur der Packstoff zugeführt wird, sondern in Umfangsrichtung stromab auch die entsprechenden, einschlagbildenden Vorrichtungen wie Faltbögen und dergleichen zur Ausbildung der Verpackung (z.B. auch parallel zugeordnete Drehköpfe zur Ausbildung von Verpackungen im Dreh- oder Doppeldreheinschlag) zugeordnet sind. Auch einem solchen, maximal integrierten Entnahme- und Packkopf (d.h. Kombination von Entnahmevorrichtung und Packvorrichtung) (gegebenenfalls auch mit Übergabemitteln zwischen beiden) kann eine mehrbahnige bzw. in einer Mehrzahl von Produktströmen vorgesehene Zuführung von Produkten zugeordnet sein, so dass der Packkopf vorzugsweise in der Art eines Zylinders oder einer Walze mit entsprechender Mehrzahl von Produkthalte- und Packstoffhaltemitteln ausgebildet ist.

Einem derartigen Kopf kann auch Produkt und Packstoff gemeinsam, z.B. durch eine Einstößervorrichtung zugeführt werden, so dass der Kopf im Wesentlichen einen Packkopf zur Teil- oder Fertigverpackung des Produktes bzw. der in mehreren Produktströmen zugeführten Produkte bildet.

Überdies kann bei Verwendung mehrerer Köpfe oder Räder (z.B. Zwei- oder Drei-Kopf-Verpackungsmaschinen) das Prinzip der kontinuierlichen Durchführung zumindest eines Produktstromes durch die Verpackungseinrichtung mit dem Prinzip einer intermittierenden oder diskontinuierlichen Führung und Behandlung eines weiteren Produktstromes in Kooperation mit anderen Produkthalte- oder Packstoffhaltemitteln verknüpft werden.

Eine Führung mehrerer Produktströme durch die Verpackungseinrichtung gestattet die Kombination eines Vorrichtungszugs für einen Produktstrom (aus kontinuierlich arbeitenden Aggregaten (Köpfen oder Rädern)) mit einem Vorrichtungszug für einen anderen Produktstrom (aus intermittierend arbeitenden Aggregaten (Köpfen oder Rädern), wobei vorzugsweise auch eine Überführung von Produkten eines Produktstromes von einer diesem zugeordneten Vorrichtung (Kopf oder Rad) in eine, insbesondere parallel angeordnete Vorrichtung (Kopf oder Rad bzw. entsprechende Produkt- bzw. Packstoffhaltemittel) innerhalb der gemeinsamen Verpackungseinrichtung (Verpackungsmaschine) möglich ist, z.B. auch im Sinne eines Ausschleusens von Produkten eines Packstoffstromes, deren Verpackung sich von derjenigen anderer Produkte im gleichen oder z.B. einem benachbarten Produktstrom unterscheidet (z.B. bei Umverpackungen).

Es ist auch möglich, das Prinzip der mehrbahnigen Führung von vorzugsweise unabhängigen Produktströmen durch eine Verpackungseinrichtung mit dem Konzept eines modularen Aufbaus einer solchen Verpackungseinrichtung zu verbinden, wie dies z.B. in der DE 10 2008 019 605 A1 dargelegt ist, so dass z.B. durch Austausch der Zuführungseinrichtungen oder der Packvorrichtung mögliche Anpassungen an Format-, Produkt- und Wechsel der Faltungsarten vorgenommen werden können.

Die Erfindung betrifft ein Hochleistungs-Verpackungsverfahren zur Verpackung von, insbesondere kleinstückigen, Produkten, vorzugsweise Süßwaren wie z.B. Hart- oder Weichkaramellen, Pralinen oder dergleichen und eine Hochleistungs-Verpackungseinrichtung, insbesondere zur Durchführung des Verfahrens sowie eine Hochleistungs-Verpackungsmaschine mit einer derartigen Verpackungseinrichtung. Erfindungsgemäß wird eine Mehrzahl von Produktströmen, vorzugsweise parallel, durch eine Verpackungseinrichtung hindurchgeführt, die vorzugsweise zumindest für einen Produktstrom, nicht vorzugsweise für alle Produktströme eine Verpackung der diesem zugehörenden Produkte in einem kontinuierlichen Prozess vorsieht.

## Patentansprüche

1. Hochleistungs-Verpackungsverfahren zur Verpackung von, insbesondere kleinstückigen, Produkten, vorzugsweise Süßwaren, wie Hart- oder Weichkaramellen, Pralinen oder dergleichen, **dadurch gekennzeichnet, dass** die Produkte (7) in einer Mehrzahl von Produktströmen (A, B) durch zumindest eine Verpackungseinrichtung (1) hindurchgeführt werden, wobei die Produkte (7) zweibahnig parallel zu einer Entnahmevorrichtung (4) der Verpackungseinrichtung (1) mit Produktaufnahmemitteln für die Produkte jedes der Produktströme (A, B) zugeführt werden, nach Aufnahme der Produkte (7) diesen sogleich ein Packstoffabschnitt zugeordnet wird und das Produkt (7) mit dem Packstoffstück in Parallelführung der Produktströme (A, B) einer Packvorrichtung (10) der Verpackungseinrichtung (1) zugeführt wird, die Produkt/Packstoff-Haltemittel für die Produkte (7) jedes Produktstromes aufweist und das fertig verpackte Produkt (7) von der Verpackungseinrichtung (1) abgefördert wird.

2. Hochleistungs-Verpackungsverfahren nach Anspruch 1, **dadurch gekennzeichnet, dass** die Produkte (7) in beiden parallelen Produktströmen (A, B) gleichzeitig durch ein rotierendes Entnahmerad (4) mit dupliziert angeordneten Produkt-/Packstoff-Haltemitteln aufgenommen werden.

3. Hochleistungs-Verpackungsverfahren nach Anspruch 2, **dadurch gekennzeichnet, dass** die Produkte (7) in beiden parallelen Produktströmen (A, B) gleichzeitig von dem Entnahmerad (4) an ein rotierendes Packrad (10) übergeben werden, wobei das Packrad (10) dupliziert angeordnete Produkt-/Packstoff-Haltemittel aufweist und mit dem Entnahmerad (4) nach dem Prinzip aneinander abrollender Kreise zusammenarbeitet.

4. Hochleistungs-Verpackungsverfahren nach Anspruch 3, **dadurch gekennzeichnet, dass** die Produkte (7) in beiden parallelen Produktströmen (A, B) gleichzeitig von dem Packrad (10) an ein rotierendes Abgaberad übergeben werden, wobei das Abgaberad (12) dupliziert angeordnete Produkt-/Packstoff-Haltemittel aufweist und mit dem Packrad (10) nach dem Prinzip aneinander abrollender Kreise zusammenarbeitet.

5. Hochleistungs-Verpackungsverfahren nach Anspruch 4, **dadurch gekennzeichnet, dass** die Produkte (7) in beiden parallelen Produktströmen (A, B) gleichzeitig von dem Abgaberad (12) zu einer Kühl- oder Temperierstrecke als Konditioniereinrichtung geführt werden, um die Verpackung heiß oder kalt anzusiegeln und eine geruchs- oder aromadichte Verpackung auszubilden.

6. Hochleistungs-Verpackungsverfahren nach Anspruch 5, **dadurch gekennzeichnet, dass** die Produkte (7) in parallelen Produktströmen (A, B) zweibahnig und verschlossen aus der Konditioniereinrichtung abgeführt werden.

7. Hochleistungs-Verpackungsverfahren nach einem der vorhergehenden Ansprüche, **dadurch gekennzeichnet, dass** die Produkte (7) in den parallelen Produktströmen (A, B) in einem kontinuierlichen Prozess in Päckchen- oder Brieffaltung verpackt werden.

8. Hochleistungs-Verpackungsverfahren nach einem der vorhergehenden Ansprüche, **dadurch gekennzeichnet, dass** die Produktströme (A, B) der Entnahmevorrichtung (4) in Längsfördereinrichtungen in der Gestalt von Transportbändern zugeführt werden und/oder die Produkte (7) innerhalb der Entnahmevorrichtung (4) um 90° gedreht werden.

9. Hochleistungs-Verpackungseinrichtung zur Verpackung von, insbesondere kleinstückigen, Produkten, vorzugsweise Süßwaren, wie Hart- oder Weichkaramellen, Pralinen oder dergleichen, insbesondere zur Durchführung des Verfahrens nach einem vorhergehenden Ansprüche, **gekennzeichnet durch** Verarbeitung einer Mehrzahl von Produktströmen (A, B) aus vereinzelten Produkten (7), mit zumindest einer Entnahmevorrichtung (4) mit Produktaufnahmemitteln für die Produkte jedes der Produktströme (A, B), und mit einer Packvorrichtung (10), die eine Mehrzahl von aus Produkt/Packstoff-Haltemitteln bestehenden Verpackungseinheiten aufweist und jede Verpackungseinheit einem Produktstrom (A, B) aus vereinzelten Produkten (7) zugeordnet ist, wobei die Hochleistungs-Verpackungseinrichtung dazu ausgebildet ist, um den der Entnahmevorrichtung (4) zweibahnig parallel zugeführten Produkten (7) nach deren Aufnahme sogleich ein Packstoffabschnitt zuzuordnen, jedes Produkt (7) mit dem Packstoffstück in Parallelführung der Produktströme (A, B) der Packvorrichtung (10) zuzuführen und das fertig verpackte Produkt (7) von der Verpackungseinrichtung (1) abzufördern.

10. Hochleistungs-Verpackungseinrichtung nach Anspruch 9, **gekennzeichnet durch** eine gleichzeitige Verarbeitung der Produktströme nach dem Prinzip aneinander abrollender Kreise zusammenarbeitender Köpfe oder Räder.

11. Hochleistungs-Verpackungseinrichtung nach einem der Ansprüche 9 oder 10, **dadurch gekennzeichnet, dass** eine Entnahmevorrichtung (4) ein Entnahmerad (4a, 4b) mit mehreren Sätzen von, vorzugsweise schwenkbar um zur, insbesondere horizontalen, Rotationsachse des Entnahmerades (4) parallele Schwenkachsen schwenkbaren Entnahmeeinheiten aufweist, wobei jeweils ein Satz dieser Entnahmeeinheiten einem Produktstrom (A, B) zugeordnet ist, wobei die Entnahmeeinheiten vorzugsweise aus paarweise angeordneten Haltebackenpaaren oder Vakuumsaugern bestehen.

12. Hochleistungs-Verpackungseinrichtung nach einem der Ansprüche 9 bis 11, **dadurch gekennzeichnet, dass** einer Entnahmevorrichtung eine Mehrzahl von Längsfördereinrichtungen, wie Transportbändern, Ketten oder dergleichen vorgeschaltet ist und jeder Längsfördereinrichtung vorzugsweise ein Produktstrom (A, B) zugeordnet ist oder eine Mehrzahl von Produktströmen (A, B) durch zumindest eine gemeinsame Längsfördereinrichtung der Entnahmevorrichtung (4) zugeführt sind.

13. Hochleistungs-Verpackungseinrichtung nach einem der Ansprüche 9 bis 12, **gekennzeichnet durch** eine um eine parallele Rotationsachse zu einer Rotationsachse der Entnahmevorrichtung (4) drehbare Packvorrichtung (15) mit je einem, jedem Packmittelstrom (A, B) zugeordnetem Satz von Verpackungseinheiten.

14. Hochleistungs-Verpackungseinrichtung nach einem der Ansprüche 9 bis 13, **dadurch gekennzeichnet, dass** der Packvorrichtung (10) eine vorzugsweise als Abgaberad (12) ausgebildete, mehrbahnige Abfördereinrichtung und/oder eine dieser nachgeordnete Konditionierstrecke (13), insbesondere Kühl- oder Wärmestrecke zum Dichtverschließen der Verpackungen, insbesondere stirnseitigen Ansiegeln, zugeordnet sind.

15. Hochleistungs-Verpackungseinrichtung nach einem der Ansprüche 9 bis 14, **gekennzeichnet durch** einer Mehrzahl von Produktströmen zugeordnete Produkt-/Packstoff-Halteeinheiten, vorzugsweise miteinander durch Transfereinrichtungen verbindbar, insbesondere vorgesehen an einer einzigen rotierenden Vorrichtung, insbesondere Kopf oder Rad.

## Claims

1. High-performance packaging method for packaging, in particular small-sized, products, preferably confectionery, such as hard or soft caramels, pralines or the like, **characterized in that** the products (7) are guided in a plurality of product streams (A, B) through at least one packaging device (1), wherein the products (7) are supplied in two lanes parallel to a removal device (4) of the packaging device (1) with product receiving means for the products of each of the product streams (A, B), after reception of the products (7) a packaging material section is immediately assigned to them and the product (7) is supplied with the packaging material piece in parallel guidance of the product streams (A, B) to a packing device (10) of the packaging device (1) which comprises product/packaging-material holding means for the products (7) of each product stream and the finished packaged product (7) is conveyed away from the packaging device (1).

2. High-performance packaging method according to claim 1, **characterized in that** the products (7) are picked up simultaneously in both parallel product streams (A, B) by a rotating removal wheel (4) with product/packaging-material holding means arranged in duplicate.

3. High-performance packaging method according to claim 2, **characterized in that** the products (7) in both parallel product streams (A, B) are transferred simultaneously from the removal wheel (4) to a rotating packing wheel (10), wherein the packing wheel (10) comprises product/packaging-material holding means arranged in duplicate and cooperates with the removal wheel (4) according to the principle of circles rolling against one another.

4. High-performance packaging method according to claim 3, **characterized in that** the products (7) in both parallel product streams (A, B) are transferred simultaneously from the packing wheel (10) to a rotating delivery wheel, wherein the delivery wheel (12) comprises product/packaging-material holding means arranged in duplicate and cooperates with the packing wheel (10) according to the principle of circles rolling against one another.

5. High-performance packaging method according to claim 4, **characterized in that** the products (7) in both parallel product streams (A, B) are guided simultaneously from the delivery wheel (12) to a cooling or temperature-control section as conditioning device in order to seal the packaging hot or cold and to form an odor- or aroma-tight packaging.

6. High-performance packaging method according to claim 5, **characterized in that** the products (7) are discharged from the conditioning device in parallel product streams (A, B) in two lanes and closed.

7. High-performance packaging method according to one of the preceding claims, **characterized in that** the products (7) are packaged in the parallel product streams (A, B) in a continuous process in pack or letter folding.

8. High-performance packaging method according to one of the preceding claims, **characterized in that** the product streams (A, B) are supplied to the removal device (4) in longitudinal conveying devices in the form of conveyor belts and/or the products (7) are rotated by 90° within the removal device (4).

9. High-performance packaging device for packaging, in particular small-sized, products, preferably confectionery, such as hard or soft caramels, pralines or the like, in particular for carrying out the method according to one of the preceding claims, **characterized by** processing a plurality of product streams (A, B) of separated products (7), with at least one removal device (4) with product receiving means for the products of each of the product streams (A, B), and with a packing device (10) comprising a plurality of packaging units consisting of product/packaging-material holding means, and each packaging unit is associated with a product stream (A, B) of separated products (7), wherein the high-performance packaging device is configured - in order to immediately assign a packaging material section to the products (7) supplied parallel in two lanes to the removal device (4) after their reception - to supply each product (7) with the packaging-material piece in parallel guidance of the product streams (A, B) to the packing device (10) and to convey the finished packaged product (7) away from the packaging device (1).

10. High-performance packaging device according to claim 9, **characterized by** simultaneous processing of the product streams according to the principle of circles of cooperating heads or wheels rolling against one another.

11. High-performance packaging device according to one of claims 9 or 10, **characterized in that** a removal device (4) comprises a removal wheel (4a, 4b) with a plurality of sets of removal units which can preferably be pivoted about pivot axes parallel to the, in particular horizontal, axis of rotation of the removal wheel (4), wherein one respective set of said removal units is associated with a product stream (A, B), wherein the removal units preferably consist of pairs of holding jaws or vacuum cups arranged in pairs.

12. High-performance packaging device according to one of claims 9 to 11, **characterized in that** a removal device is preceded by a plurality of longitudinal conveying devices, such as conveyor belts, chains or the like, and each longitudinal conveying device has preferably assigned thereto a product stream (A, B) or a plurality of product streams (A, B) are supplied to the removal device (4) by at least one common longitudinal conveying device.

13. High-performance packaging device according to one of claims 9 to 12, **characterized by** a packing device (15) rotatable about a parallel axis of rotation to an axis of rotation of the removal device (4), with a respective set of packaging units associated with each packaging means stream (A, B).

14. High-performance packaging device according to one of claims 9 to 13, **characterized in that** the packing device (10) is associated with a multi-lane conveying device, preferably in the form of a delivery wheel (12), and/or a conditioning section (13), in particular a cooling or heating section, arranged downstream thereof for sealing the packages tightly, in particular sealing on the end faces.

15. High-performance packaging device according to one of claims 9 to 14, **characterized by** product/packaging-material holding units assigned to a plurality of product streams, preferably connectable to one another by transfer devices, in particular provided on a single rotating device, in particular head or wheel.

## Revendications

1. Procédé d'emballage haute performance pour l'emballage notamment de produits de petites dimensions, de préférence des sucreries, comme des caramels durs ou mous, des pralines ou similaires,
**caractérisé en ce que** l'on fait passer les produits (7) selon une pluralité de flux de produits (A, B) à travers un groupe d'emballage (1), les produits (7) étant amenés selon deux voies, parallèlement à un dispositif de prélèvement (4) du groupe d'emballage (1), avec des moyens de prélèvement de produits pour les produits de chaque flux de produits (A, B), l'on associe aux produits (7), immédiatement après accueil de ceux-ci, un tronçon de matériau d'emballage, et l'on amène le produit (7) avec la pièce de matériau d'emballage, selon un guidage en parallèles des flux de produits (A, B), à un dispositif d'emballage (10) du groupe d'emballage (1), qui présente des moyens de maintien de produit/de matériau d'emballage pour les produits (7) de chaque flux de produits, et le produit (7) dont l'emballage est achevé est évacué du groupe d'emballage (1).

2. Procédé d'emballage haute performance selon la revendication 1, **caractérisé en ce que** les produits (7) sont accueillis simultanément dans les deux flux de produits (A, B) parallèles, par une roue de prélèvement (4) en rotation sur laquelle sont agencés de manière dédoublée, des moyens de maintien de produit/matériau d'emballage.

3. Procédé d'emballage haute performance selon la revendication 2, **caractérisé en ce que** les produits (7) sont transférés, simultanément pour les deux flux de produits (A, B), de la roue de prélèvement (4) à une roue d'emballage (10) en rotation, la roue d'emballage (10) présentant des moyens de maintien de produit/matériau d'emballage agencés de manière dédoublée, et interagissant avec la roue de prélèvement (4) selon le principe de cercles roulant mutuellement les uns contre les autres.

4. Procédé d'emballage haute performance selon la revendication 3, **caractérisé en ce que** les produits (7) dans les deux flux de produits (A, B) sont transférés simultanément par la roue d'emballage (10) à une roue d'évacuation en rotation, la roue d'évacuation (12) présentant des moyens de maintien de produit/matériau d'emballage agencés de manière dédoublée, et interagissant avec la roue d'emballage (10) selon le principe de cercles roulant mutuellement les uns contre les autres.

5. Procédé d'emballage haute performance selon la revendication 4, **caractérisé en ce que** les produits (7) sont menés, simultanément dans les deux flux de produits (A, B) parallèles, de la roue d'évacuation (12) à un parcours de refroidissement ou de mise en température en tant que dispositif de conditionnement, en vue d'assurer un scellage à chaud ou à froid de l'emballage et de réaliser un emballage étanche aux odeurs ou aux arômes.

6. Procédé d'emballage haute performance selon la revendication 5, **caractérisé en ce que** les produits (7) sont évacués du dispositif de conditionnement selon des flux de produits (A, B) parallèles, sur deux voies, et en étant fermés.

7. Procédé d'emballage haute performance selon l'une des revendications précédentes, **caractérisé en ce que** les produits (7) dans les flux de produits (A, B) parallèles, sont emballés par un processus continu selon un pliage en petits paquets ou en enveloppe.

8. Procédé d'emballage haute performance selon l'une des revendications précédentes, **caractérisé en ce que** les flux de produits (A, B) sont amenés au dispositif de prélèvement (4) dans des dispositifs de transport longitudinaux sous la forme de bandes de transport, et/ou les produits (7) sont tournés de 90° à l'intérieur du dispositif de prélèvement (4).

9. Groupe d'emballage haute performance pour l'emballage notamment de produits de petites dimensions, de préférence des sucreries, comme des caramels durs ou mous, des pralines ou similaires, notamment pour la mise en œuvre du procédé selon l'une des revendications précédentes, **caractérisé par** le traitement d'une pluralité de flux de produits (A, B) de produits (7) séparés individuellement, à l'aide d'au moins un dispositif de prélèvement (4) avec des moyens de prélèvement de produits pour les produits de chacun des flux de produits (A, B), et d'un dispositif d'emballage (10), qui présente une pluralité d'unités d'emballage constituées de moyens de maintien de produit/de matériau d'emballage, et chaque unité d'emballage est associée à un flux de produits (A, B) de produits (7) séparés individuellement, le groupe d'emballage haute-performance étant configuré pour associer aux produits (7) amenés selon deux voies en parallèle au dispositif de prélèvement (4), un tronçon de matériau d'emballage, immédiatement après leur accueil, pour amener chaque produit (7) avec la pièce de matériau d'emballage, selon un guidage en parallèle des flux de produits (A, B), au dispositif d'emballage (10), et pour évacuer le produit (7), dont l'emballage est achevé, du groupe d'emballage (1) .

10. Groupe d'emballage haute performance selon la revendication 9, **caractérisé par** un traitement simultané des flux de produits selon le principe de cercles roulant mutuellement les uns contre les autres, de têtes ou roues interagissant les unes avec les autres.

11. Groupe d'emballage haute performance selon l'une des revendications 9 ou 10, **caractérisé en ce qu'**un dispositif de prélèvement (4) présente une roue de prélèvement (4a, 4b) avec plusieurs jeux d'unités de prélèvement pouvant pivoter autour des axes de pivotement parallèles à l'axe de rotation, notamment horizontal, de la roue de prélèvement (4), un jeu de ces unités de prélèvement étant associé respectivement à un flux de produits (A, B), les unités de prélèvements étant de préférence constituées de paires de mors de maintien ou de ventouses à vide, agencées par paires.

12. Groupe d'emballage haute performance selon l'une des revendications 9 à 11, **caractérisé en ce qu'**en amont d'un dispositif de prélèvement sont agencés une pluralité de dispositifs de transport longitudinaux, tels que des bandes de transport, des chaines ou éléments similaires, et à chaque dispositif de transport longitudinal est de préférence associé un flux de produits (A, B), ou bien une pluralité de flux de produits (A, B) sont amenés par au moins un dispositif de transport longitudinal commun, au dispositif de prélèvement (4).

13. Groupe d'emballage haute performance selon l'une des revendications 9 à 12, **caractérisé par** un dispositif d'emballage (15) rotatif autour d'un axe de rotation parallèle à un axe de rotation du dispositif de prélèvement (4), et comportant respectivement un jeu d'unités d'emballage associé à chaque flux de moyen d'emballage (A, B).

14. Groupe d'emballage haute performance selon l'une des revendications 9 à 13, **caractérisé en ce qu'**au dispositif d'emballage (10) sont associés un dispositif d'évacuation à voie multiples, de préférence réalisé sous la forme d'une roue d'évacuation (12), et/ou un parcours de conditionnement (13), qui est placé en aval du dispositif d'évacuation, notamment un parcours de refroidissement ou de chauffage pour le soudage étanche des emballages, notamment leur scellage frontal.

15. Groupe d'emballage haute performance selon l'une des revendications 9 à 14, **caractérisé par** une pluralité d'unités de maintien de produit/matériau d'emballage associées aux flux de produits, pouvant de préférence être reliées par des dispositifs de transfert, et notamment prévues sur un seul dispositif rotatif, notamment une tête ou une roue.
